# EUROPÄISCHE PATENTSCHRIFT

(11) **EP 0 818 620 B1**
(45) Veröffentlichungstag und Bekanntmachung des Hinweises auf die Patenterteilung: **21.11.2001**
(21) Anmeldenummer: 97109636.7
(22) Anmeldetag: 13.06.1997
(51) Int. Cl.: F02F 7/00

(54) **Kurbelgehäuse für eine Hubkolbenmaschine**
Crankcase for an internal combustion engine
Carter d'un moteur à explosion interne

(30) Priorität: 12.07.1996 DE 19628110
(43) Veröffentlichungstag der Anmeldung: 14.01.1998
(73) Patentinhaber: DaimlerChrysler AG, 70567 Stuttgart (DE)
(72) Erfinder: Betsch, Jochen, 71334 Waiblingen (DE)

(56) Entgegenhaltungen:
- EP-A- 0 145 393
- EP-A- 0 459 428
- FR-A- 2 023 954
- US-A- 2 752 896
- US-A- 4 876 998

## Beschreibung

Die Erfindung betrifft ein Kurbelgehäuse für eine Hubkolbenmaschine nach dem Oberbegriff des Anspruches 1.

Die einwandfreie Funktion des Triebwerkes setzt hohe Formsteifigkeiten des Kurbelgehäuses und insbesondere des Lagerstuhles voraus, um bei äußeren Krafteinwirkungen im Betrieb möglichst geringe Formänderungen zuzulassen.

Die DE-OS 42 27 125 schlägt ein Kurbelgehäuse für eine Hubkolbenbrennkraftmaschine vor, welches Lagerstühle zur Anbindung geteilter Grundlager einer Kurbelwelle und eine bis unter die Kurbelwellenachse herabreichende Kurbelwellenschürze umfaßt, welche oberhalb der Kurbelwellenachse an die Lagerstühle angebunden ist. Das Grundlager der Kurbelwelle besteht aus einer in dem Lagerstuhl angeordneten Lagerhälfte und einem mit dem Lagerstuhl in materialstarken Schraubenpfeifen mittels Lagerschrauben verschraubten Lagerdeckel.

Die Formsteifigkeit des Kurbelgehäuses bzw. des Lagerstuhls ist durch Materialanhäufung im Bereich der Schraubenpfeifen, der Verbindung der Kurbelwellenschürze mit dem Lagerstuhl benachbarter Schraubenpfeifen auf der dem Grundlager abgewandten Seite sowie durch die Anordnung von Verstärkungsrippen, die auf der Außenseite der Kurbelwellenschürze und des Lagerstuhls angeordnet sind, erreicht. Dieser hohe Materialeinsatz steht der in vielen Anwendungsfällen an das Kurbelgehäuse gestellten Forderung nach geringem Gewicht entgegen.

Die DE-OS 33 05 731 beschreibt ein Kurbelgehäuse für Mehrzylinder-Hubkolben-Brennkraftmaschinen, welches quer zur Maschinenlängsachse angeordnete Wände aufweist, in denen jeweils ein geteiltes Grundlager der Kurbelwelle angeordnet ist. Das Grundlager besteht aus einem wandfesten Lagerteil und einem Lagerdeckel, wobei der Lagerdeckel mittels Schraubbolzen in materialstarken Schraubenpfeifen mit dem wandfesten Lagerteil verschraubt ist. Das Kurbelgehäuse ist bis in einen Bereich unterhalb der Kurbelwellenachse etwa auf Höhe der Schraubenköpfe der Schraubbolzen geführt und ist mit einem Steg etwa auf Höhe der Teilungsachse des Grundlagers mit dem wandfesten Lagerteil verbunden. Abgesehen von diesen Stegen wird die von der Kurbelwelle in das Grundlager eingeleitete Kolbenkraft der Hubkolbenmaschine im wesentlichen durch die Schraubenpfeifen in verschiedenen Bereichen der die Grundlager aufweisenden Wand in das Kurbelgehäuse abgeleitet, wobei die Lage dieser Bereiche von der Stärke der Querkomponente des Vektors der Kolbenkraft beeinflußt ist. Somit ist die Formsteifigkeit des Kurbelgehäuses von der Wandstärke der die Grundlager aufweisenden Wand bestimmt, welche auch unter Berücksichtigung der geringen Steifigkeit der Schraubenpfeife und der darin aufgenommenen Schrauben gegen die Einwirkung der Querkomponente des Kolbenkraftvektors eine das Gewicht des Kurbelgehäuses stark erhöhende Größe annehmen muß.

Aufgabe der Erfindung ist es daher, ein Kurbelgehäuse der gattungsgemäßen Art derart weiterzubilden, daß bei reduziertem Gesamtgewicht höhere dynamische Lasten ertragen werden.

Diese Aufgabe wird bei einem Kurbelgehäuse gemäß dem Oberbegriff mit den Merkmalen des Anspruches 1 gelöst.

In der quer zur Maschinenlängsachse angeordneten Wand ist eine die Schraubenpfeife einschließende Rippe eingebracht, welche bis zur Lagerstuhlwurzel geführt ist und die Wandstärke der Wand lokal erhöht. Dabei sind auf den parallel zur Wand verlaufenden Stirnseiten der Rippe Einsenkungen eingebracht, wodurch die von dem Grundlager der Kurbelwelle aufnehmbare Kolbenkraft der Hubkolbenmaschine im wesentlichen in den durch die Einsenkungen ausgebildeten Rippenschenkeln beidseitig um die Einsenkungen herum in die Lagerstuhlwurzel ableitbar ist.

Es ist vorgesehen, eine Gewindebohrung der Schraubenpfeife zur Aufnahme einer Lagerschraube auf die der Schraubenpfeife etwa gegenüberliegend angeordnete Lagerstuhlwurzel gerichtet in die Rippe einzubringen, wodurch eine gleichmäßige Belastung der Gewindegänge der Schraubverbindung bei einer Kraftbelastung im Betrieb der Hubkolbenmaschine gegeben ist. Vorteilhaft weiten sich die Stirnseiten der Rippe zum Lagersegment auf, wobei die Rippe von der Teilungsachse an über einen Bogenwinkel von 50° bis 80° mit dem Lagersegment verbunden ist. Somit stützt die Rippe bei einem geringen Materialeinsatz bedingt durch die Einsenkungen auf den Stirnseiten das Lagersegment auf einem breiten Bereich ab, wodurch die Steifigkeit der Lagerstuhlanbindung des Grundlagers gegen die Querkomponente einer im Betrieb der Hubkolbenmaschine von dem Grundlager der Kurbelwelle aufgenommenen Kolbenkraft wesentlich erhöht ist. Weiten sich die Stirnseiten dabei in der Form bezüglich der Längserstreckung der Rippe konvexer Bögen auf, so kann bei einer Kraftbeaufschlagung der Rippe ein homogener Kraftfluß unter Einsparung von Material in weniger beanspruchten Zonen der Rippe ausgebildet werden.

Es wird als vorteilhaft gesehen, die Einsenkungen beider Stirnseiten gleich auszugestalten und einander gegenüberliegend anzuordnen, wodurch die Rippe zur gezielten Ausbildung geteilter Kraftflüsse beidseitig der Einsenkungen konturiert ist. Besonders vorteilhaft weisen dabei die Einsenkungen annähernd die Form eines Tropfens auf, wobei die Kraftströme beidseitig der Einsenkungen nahe der Lagerstuhlwurzel benachbart eines Spitzendes der Einsenkungen zu einem homogenen Kraftfluß vereinigt sind. Am grundlagerseitigen Ende der Rippe wird der bedingt durch ein hier in der Einsenkung angeordnetes Rundende konvex verlaufende Kraftfluß derart in die Schraubenpfeife eingeleitet, daß die in der Schraubenpfeife befindliche Lagerschraube gleichmäßig belastet ist.

Durch den im Vergleich mit der hohen Gestaltfestigkeit der Rippe weichen Bereich mit einem Einsenkungsboden zwischen den Einsenkungen ist gewährleistet, daß die beidseitig der Einsenkungen konvex verlaufenden Kraftflüsse neben den ohne die Einsenkung im Betrieb der Hubkolbenmaschine hoch beanspruchten letzten Gewindegängen an der Spitze der Lagerschraube auch die der Einsenkung abgewandten, unteren Gewindegänge zur Entlastung der oberen Gewindegänge beansprucht sind.

Vorteilhaft weist der Einsenkungsboden eine minimale Bodendicke auf, welche höchstens der Wandstärke der Wand entspricht, aus der sich die Rippe hervorhebt. Liegt der Einsenkungsboden in einer gemeinsamen Ebene mit der Wand und sind beide Stirnseiten der Rippe gleich weit von der Wand entfernt, so sind weitgehend homogene Kraftflußverhältnisse geschaffen.

In einer vorteilhaften Ausgestaltung eines Kurbelgehäuses sind die Bereiche der Einsenkung benachbart des Spitzendes und des Rundendes, welche auf einer Linie zwischen Krafteinleitung und Kraftausleitung im Betrieb der Hubkolbenmaschine liegen, mit geringem Durchmessergefälle abzusetzen, wodurch schädliche Druckspitzen im Material vermieden sind.

Besonders vorteilhaft sind in der Wand mehrere Stege angeordnet, welche die Rippe mit der Kurbelwellenschürze verbinden und sich etwa auf die Höhe der Stirnseiten der Rippe erheben. Dabei sind durch die dünne Wand und die vergleichsweise steifen Stege Schubfelder geschaffen, welche mit geringem Materialeinsatz und damit geringem Gewicht eine Abstützung des Grundlagers an der Kurbelwellenschürze ermöglichen und die Steifigkeit des Lagerstuhls wesentlich erhöhen. Zur Stützung besonders steif auszuführender Bereiche der Rippe verläuft vorteilhaft ein oberer Steg etwa auf Höhe des Rundendes der Einsenkung, ein mittiger Steg etwa auf Höhe der Teilung des Grundlagers benachbart der Schraubenpfeife und ein unterer Steg vom Fußpunkt des mittigen Steges zum offenen Schürzenende der Kurbelwellenschürze. Dabei sind der obere Steg und der mittige Steg weitgehend parallel zur Teilungsachse angeordnet, wodurch eine zu bevorzugende, weitgehend rechteckige Form der Schubfelder mit hoher Steifigkeit durch orthogonal zueinander gerichteten Schubflüssen erreicht ist.

In dem durch die Kraftausleitung in den Rippen spannungsarmen Gebiet der Wand zwischen den Rippen kann ein Durchbruch in die Wand eingebracht sein, wodurch eine Ventilation der Hubkolbenmaschine und darüber hinaus eine Gewichtsreduzierung erzielt ist. Um den auszuleitenden Kraftfluß von der Lagerschraube möglichst wenig zu beeinträchtigen und darüber hinaus Spannungsspitzen in den Eckbereichen des Durchbruchs zu vermeiden, ist ein solcher Durchbruch vorteilhaft elliptisch oder oval in einer etwa dem Kraftfluß entsprechenden Richtung ausgestaltet. Um eine gleichmäßige Kraftausleitung und eine gleichmäßige Belastung des Lagerstuhles zu erreichen, ist es von Vorteil, den Lagerstuhl symmetrisch bezüglich einer orthogonal zu der Teilungsachse verlaufenden Mittelachse des Grundlagers auszugestalten.

Der erfindungsgemäße Lagerstuhl ist vorteilhaft einstückig ausgeführt, wodurch die Herstellung des Lagerstuhls in einer Serienproduktion als Gußstück kostengünstig ist.

Ein Ausführungsbeispiel des Kurbelgehäuses ist anhand der Zeichnung nachstehend näher erläutert. Es zeigen:
- Fig. 1: eine perspektivische, teilweise geschnittene Ansicht eines Lagerstuhls des Kurbelgehäuses,
- Fig. 2: eine um etwa 180° gedrehte Ansicht des Lagerstuhls nach Fig. 1 mit dargestellten Kraftwirkungslinien beim Lastfall Kolbenkraft,
- Fig. 3: die Ansicht nach Fig. 2 mit dargestellten Kraftwirkungslinien beim Lastfall Montage,
- Fig. 4: einen Schnitt entlang der Linie IV-IV in Fig. 1,
- Fig. 5: einen Schnitt entlang der Linie V-V in Fig. 1,
- Fig. 6: einen Schnitt entlang der Linie VI-VI in Fig. 1.

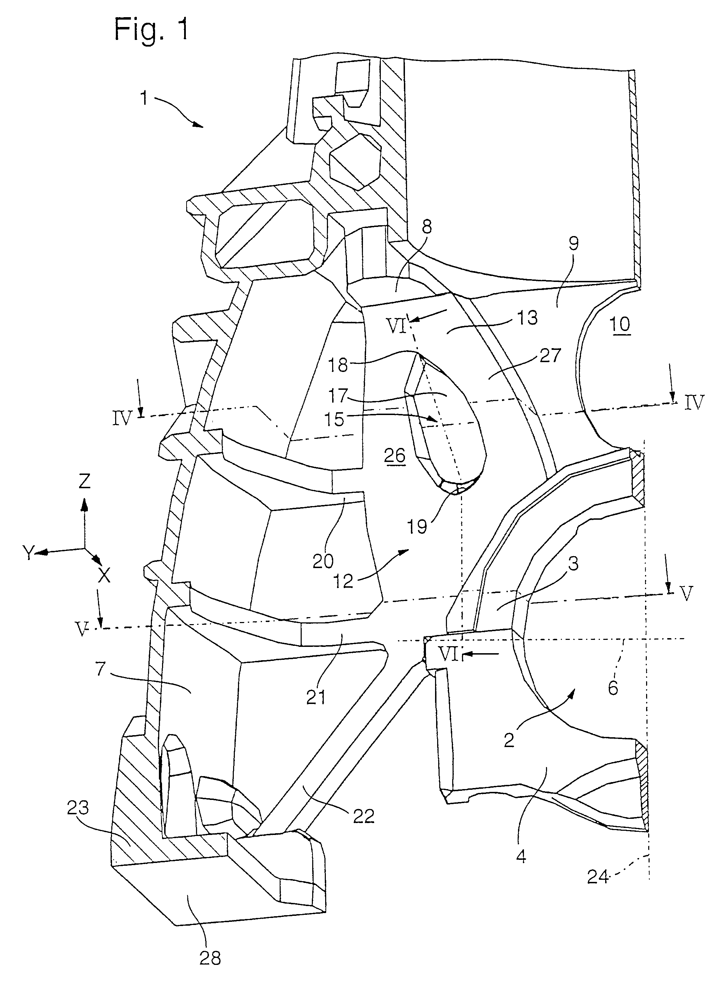

Der in Fig. 1 dargestellte Lagerstuhl 1 dient der Anbindung eines geteilten Grundlagers 2 einer Kurbelwelle an das Kurbelgehäuse, wobei das entlang einer Teilungsachse 6 geteilte Grundlager 2 aus einem mit dem Lagerstuhl 1 verbundenen Lagersegment 3 und einem mit dem Lagerstuhl verschraubbaren Lagerdeckel 4 besteht. Das Grundlager 2 ist durch eine Wand 9 mit einer bis unter die Teilungsachse 6 reichenden Kurbelwellenschürze 7 und einer Lagerstuhlwurzel 8 des Kurbelgehäuses verbunden. Zur Kraftausleitung aus dem im Betrieb der Hubkolbenmaschine mit einer Kolbenkraft beaufschlagten Grundlager 2 der Kurbelwelle erhebt sich aus der Wand 9 eine Rippe 12, welche das Lagersegment 3 an die Lagerstuhlwurzel 8 anbindet, wobei die Rippe 12 sich zum Grundlager 2 hin in der Form bezüglich der Längserstreckung der Rippe 12 konvexer Bögen aufweitet und von der Teilungsachse 6 an über einen Bogenwinkel von etwa 75° mit dem Lagersegment 3 verbunden ist.

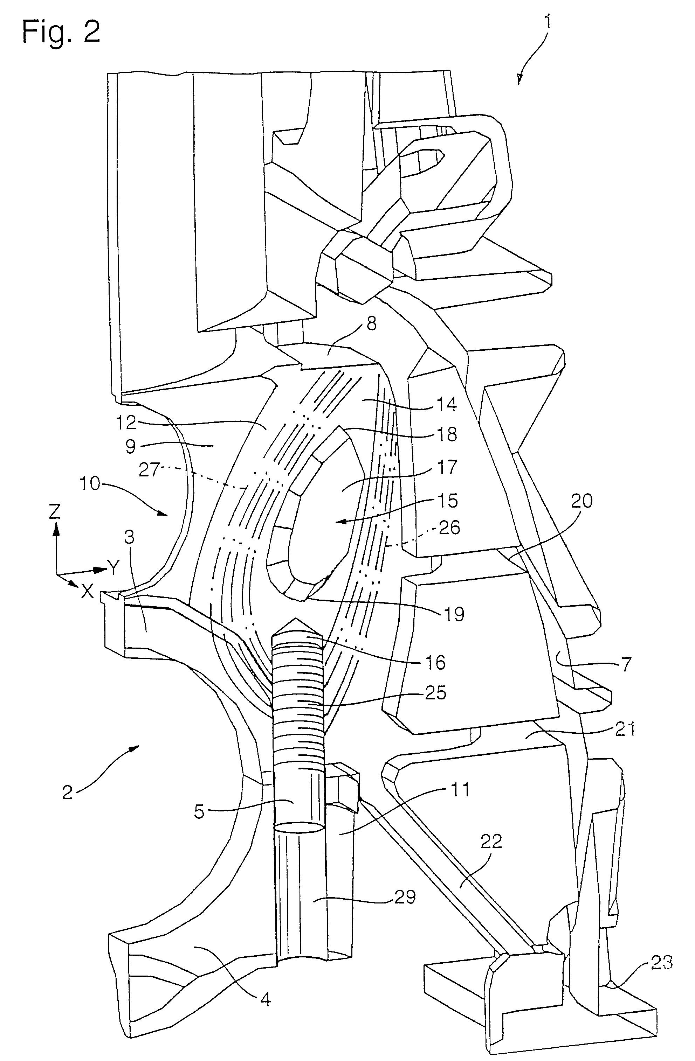

In die Stirnseite 13 der Rippe 12, welche sich spiegelsymmetrisch aus der Wand 9 erhebt, ist eine tropfenförmige Einsenkung 15 eingebracht, welche ein der Lagerstuhlwurzel 8 zugeordnetes Spitzende 18 und ein dem Grundlager 2 zugeordnetes Rundende 19 aufweist. Durch die beidseitig der Wand 9 in der Rippe 12 angeordneten Einsenkungen 15, zwischen denen ein Einsenkungsboden 17 mit einer geringen Bodendicke liegt, sind annähernd konvex verlaufende Rippenschenkel 26, 27 zur gezielten Ausleitung eines in die Rippenschenkel 26, 27 aufgeteilten Kraftflusses einer im Betrieb der Hubkolbenmaschine auf den Lagerstuhl wirkenden Kolbenkraft gebildet. Die Einsenkung 15 liegt etwa mittig zwischen den Rippenschenkeln 26, 27, wobei das Rundende 19 der Einsenkung 15 etwa auf Höhe der Anbindung des innenliegenden Rippenschenkels 27 an das Lagersegment 3 gering beabstandet dem Ende der Gewindebohrung zur Aufnahme einer Lagerschraube (Fig. 2) angeordnet ist. Dadurch ist es möglich, durch die gewölbte Kontur die Krafteinleitung in das Gewinde zu steuern, wie zu Fig. 2 beschrieben.

Zwischen der Rippe 12 und der Kurbelwellenschürze 7 verlaufend weist die Wand 9 Stege 20, 21, 22 auf, welche sich aus der Wand 9 bis auf die Höhe der Stirnseite 13 der Rippe 12 spiegelsymmetrisch zu der Wand 9 erheben. Ein oberer Steg 20 liegt etwa auf Höhe des Rundendes 19 der Einsenkung 15 und verläuft parallel zu der Teilungsachse 6 des Grundlagers 2, ein mittiger Steg 21 verbindet parallel zur Teilungsachse 6 verlaufend den Fußbereich der Rippe 12 benachbart der Grundlagerteilung mit der Kurbelwellenschürze 7 und ein unterer Steg 22 schließt das Schürzenende 23 der Kurbelwellenschürze 7 etwa auf Höhe der Mündung des mittigen Steges 21 an die Rippe 12 des Lagerstuhls 1 an. Die Stege 20, 21, 22 verlaufen benachbart des Zusammenschlusses der Wand 9 und der Kurbelwellenschürze 7 weitgehend bogenförmig in Richtung der Erstreckung der Kurbelwellenschürze 7 und erheben sich dabei im Verlauf entlang der Kurbelwellenschürze 7 etwa in dem gleichen Maße aus der Kurbelwellenschürze 7 wie aus der Wand 9 benachbart der Rippe 12, wodurch die Formsteifigkeit der Kurbelwellenschürze 7 wesentlich erhöht ist.

Der als einteiliges Gußstück ausgeführte Lagerstuhl 1 eines Kurbelgehäuses ist symmetrisch bezüglich einer Mittelachse 24 des Grundlagers 2 ausgestaltet, welche orthogonal zu der Teilungsachse 6 verläuft. Somit ist das Gebilde mit waagerechten Aufsatzflächen 28 der Schürzenenden 23 auf ein entsprechend ausgestaltetes weiteres Bauteil des die Hubkolbenmaschine umfassenden Triebwerkes, zum Beispiel eine ölwanne, aufsetzbar. Zwischen den beidseitig des Lagersegmentes 3 angeordneten Rippen 12 ist in die Wand 9 ein hochovaler Durchbruch 10 eingebracht, wodurch eine verbesserte Ventilation der Hubkolbenmaschine sowie eine Reduzierung des Gesamtgewichts des Lagerstuhles 1 erreicht ist.

Fig. 2 zeigt eine Ansicht der der in Fig. 1 dargestellten Seite gegenüberliegenden Seite des Lagerstuhles 1. Der Lagerdeckel 4 des Grundlagers 2 der Kurbelwelle ist mittels einer Schraube 5 in einer Schraubenpfeife 11 mit dem Lagersegment 3 verbunden und in der Rippe 12 verschraubt. Die Schraubenpfeife 11 weist dabei in der Rippe 12 eine Gewindebohrung 16 auf, welche auf die Lagerstuhlwurzel 8 gerichtet ist, an der die Rippe 12 das Grundlager 2 abstützt. Im Lagerdeckel 4 ist die Schraubenpfeife 11 als dickwandiger Zylinder ausgeführt und weist eine Durchgangsbohrung 29 zur Einführung der Schraube 5 auf, welche den Lagerdeckel 4 in verschraubtem Zustand vorspannt. Zwischen der Gewindebohrung 16 und der Lagerstuhlwurzel 8 ist in die Rippenstirnseite 14 der sich symmetrisch aus der Wand 9 erhebenden Rippe 12 eine tropfenförmige Einsenkung 15 eingebracht, welche der in Fig. 1 dargestellten Einsenkung konturgleich gegenüberliegt. Die Einsenkung 15 mit einem Spitzende 18 benachbart der Lagerstuhlwurzel 8 und einem Rundende 19 benachbart dem Grundlager 2 bildet in der sich zum Grundlager 2 hin in konvexen Bögen aufweitenden Rippe 12 konvex verlaufende Rippenschenkel 26, 27 aus, welche eine in das Grundlager 2 eingebrachte Kolbenkraft der Hubkolbenmaschine in geteilten Kraftflüssen in die Lagerstuhlwurzel 8 ableiten.

Durch die Ausbildung der Rippenschenkel 26, 27 mit hoher Formsteifigkeit und der dazwischen liegenden Einsenkung 15 mit einem vergleichsweise weichen Einsenkungsboden 17 wird die Belastung des Lagerstuhles 1 durch die Kolbenkraft der Hubkolbenmaschine in durch die Gestalt der Rippenschenkel 26, 27 beeinflußten, konvexer Kraftflußrichtungen, welche strichpunktiert dargestellt sind, gezielt abgeleitet. Die Lagerschraube 5 und die Gewindebohrung 16 in der Schraubenpfeife 11 sind durch die geteilte Kraftausleitung in den Rippenschenkeln 26, 27 gleichmäßig belastet, insbesondere wird die Belastung der Gewindegänge 25 der Schraubverbindung aus Lagerschraube 5 und Gewindebohrung 16 in der Schraubenpfeife 11 der Rippe 12 zur Entlastung der hoch belasteten Bereiche am Fuß der Lagerschraube 5 in Richtung der schraubenkopfseitigen Gewindegänge 25 verschoben.

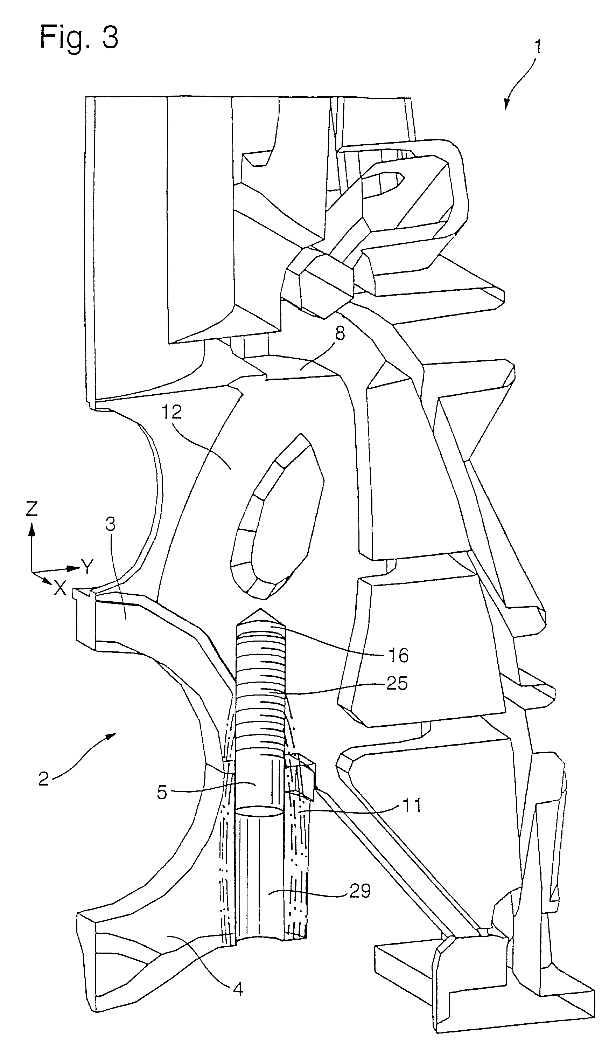

Fig. 3 zeigt in einer im wesentlichen Fig. 2 entsprechenden Ansicht eines Lagerstuhles 1 mit einer zweischenkeligen Rippe 12 zur Anbindung eines geteilten Grundlagers 2 der Kurbelwelle an eine Lagerstuhlwurzel 8 strichpunktiert die Wirkungslinien der durch die Lagerschraube 5 in den Lagerstuhl 1 eingebrachten Montagekraft zur Verspannung des Lagerdeckels 4. Ist das Grundlager 2 der Kurbelwelle nicht durch eine Kolbenkraft der Hubkolbenmaschine beaufschlagt, so ist die Schraubverbindung im wesentlichen durch die statische Vorspannkraft der Lagerschraube beansprucht, welche zwecks Vermeidung einer Lösung des Lagerdeckels 4 von dem Lagersegment 3 bei einer Kraftbeaufschlagung des Grundlagers 2 durch eine Kolbenkraft größer als die maximal zu erwartende in Richtung der Schraubenpfeife 11 wirkende dynamische Kraft ist. Die Lagerschraube 5 durchsetzt eine Durchgangsbohrung 29 des im Lagerdeckel 4 angeordneten Bereiches der Schraubenpfeife 11 und ist in eine Gewindebohrung 16 der Rippe 12 eingeschraubt, wobei vornehmlich die schraubenkopfseitigen Gewindegänge 25 durch die Vorspannkraft belastet sind und in der Schraubenpfeife 11 eine Druckbelastung ansteht. Den daraus entstehenden Druckspannungen im Lagerdeckel 4 setzt die Schraubenpfeife 11 die Form eines dickwandigen Zylinders entgegen.

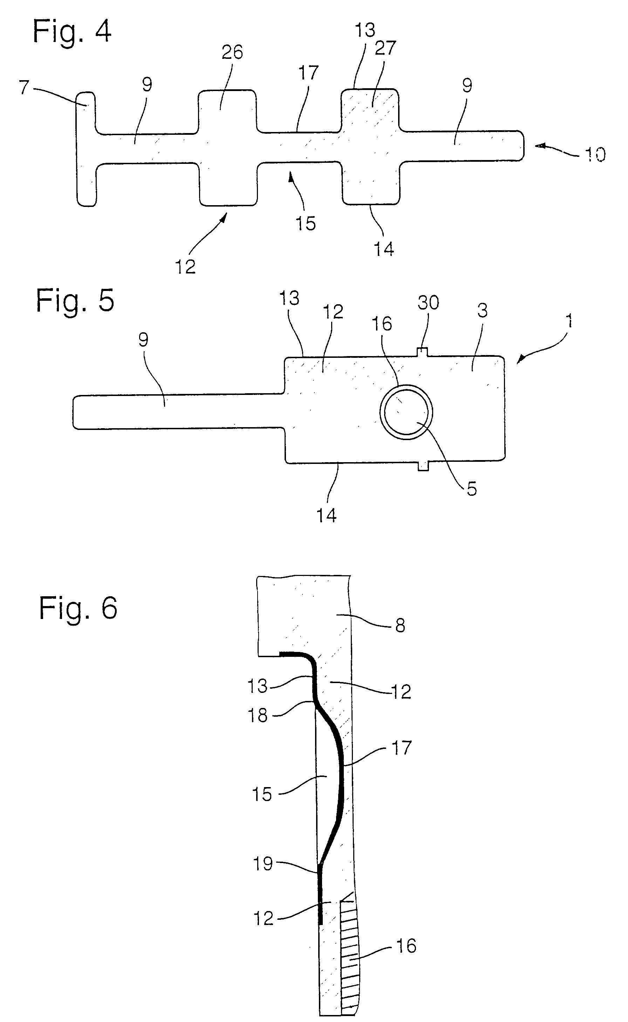

Fig. 4 zeigt in einem Schnitt entlang der Linie IV-IV in Fig. 1 eine vom Ventilationsdurchbruch 10 ausgehende Wand 9, welche endseitig an der Kurbelwellenschürze 7 angeformt ist. Aus der Wand 9 erhebt sich spiegelsymmetrisch eine Rippe 12, so daß die Stirnseiten 13, 14 der Rippe 12 gleich weit von der Wand 9 entfernt sind. Durch Einsenkungen 15 in den Stirnseiten 13, 14 sind Rippenschenkel 26, 27 zur Erhöhung der Formsteifigkeit der Wand 9 gebildet. Durch die hohe Formsteifigkeit der Rippenschenkel 26, 27 im Vergleich zu den relativ weichen Bereichen der umliegenden Wand 9 und dem zwischen den Rippenschenkeln 26, 27 angeordneten Einsenkungsboden 17, welcher eine geringe Dicke aufweist, die in diesem Beispiel annähernd der Wandstärke der Wand 9 entspricht, ist gewährleistet, daß eine Kraftübertragung des gezeigten Lagerstuhlquerschnittes im wesentlichen durch die Querschnitte der Rippenschenkel 26, 27 bestimmt ist. Die Querschnittskontur weist abgerundete Kanten am Fuß und am Rand der Stirnseiten 13, 14 der Rippenschenkel 26, 27 auf. Dadurch ist über die Reduzierung der Kerbwirkung im Bereich der Anbindung der Rippenschenkel 26, 27 an den Einsenkungsboden 17 und die Wand 9 hinaus die kostengünstige Herstellung des Bauteils durch Gießen mit einer einfach gestalteten Form begünstigt.

Fig. 5 zeigt in einem Schnitt entlang der Linie V-V in Fig. 1 einen Querschnitt des Lagerstuhles 1 oberhalb der Teilung des Grundlagers der Kurbelwelle, welcher eine beidseitig in gleichem Maße aus einer Wand 9 hervortretende Rippe 12 aufweist, welche einstückig mit einem Lagersegment 3 des Grundlagers der Kurbelwelle verbunden ist. Die Rippe 12 und das Lagersegment 3 weisen eine deutlich größere Wandstärke auf als die Wand 9, wodurch eine stark vergrößerte Formsteifigkeit bedingt durch ein erhöhtes Flächenträgheitsmoment einer Kraftbeaufschlagung entgegengesetzt ist. Im Ausführungsbeispiel ist mit einer etwa dreimal größeren Wandstärke der Rippe 12 als der Wand 9 ein 27-fach größeres Flächenträgheitsmoment und damit in dem Maß erhöhte Formsteifigkeit im Bereich der Rippe 12 erzielt.

Leicht exzentrisch zum Lagersegment 3 ist auf der Symmetrieachse des Querschnittes der Rippe 12 eine Gewindebohrung 16 angeordnet, in die eine Lagerschraube 5 zur Befestigung des Lagerdeckels des geteilten Grundlagers eingeschraubt ist.

Fig. 6 stellt in einem Schnitt entlang der Linie VI-VI in Fig. 1 einen Querschnitt der Rippe 12 dar, welche ein hier der Einfachheit halber nicht dargestelltes geteiltes Grundlager der Kurbelwelle an eine Lagerstuhlwurzel 8 des Kurbelgehäuses anbindet. Dabei weist die Rippe 12 an dem der Lagerstuhlwurzel 8 gegenüberliegenden Ende eine Gewindebohrung 16 zur Verschraubung eines Lagerdeckels des geteilten Grundlagers auf. Zwischen der Gewindebohrung 16 und der Lagerstuhlwurzel 8 ist in die Stirnseite 13 der Rippe 12 eine tropfenförmige Einsenkung 15 (siehe Fig. 1) eingebracht, deren Spitzende 18 benachbart der Lagerstuhlwurzel 8 angeordnet ist. Der Querschnitt der Rippe 12 ist in den Einsenkungen 15 bis zum Erreichen eines Einsenkungsbodens 17 mit geringem Gefälle und abgerundeten Spitzenden 18 und Rundenden 19 reduziert, um Spannungsspitzen bei einer Krafteinleitung in die Rippe 12 in Richtung der Gewindebohrung 16 zu vermeiden.

## Patentansprüche

1. Kurbelgehäuse, für eine Hubkolbenmaschine, mit einem Lagerstuhl (1) zur Anbindung eines geteilten Grundlagers (2) der Kurbelwelle, welches ein dem Lagerstuhl (1) angeformtes Lagersegment (3) und einen mittels Lagerschrauben (5) mit dem Lagersegment (3) in Schraubenpfeifen (11) beidseitig verschraubbaren Lagerdeckel (4) umfaßt, wobei der Lagerstuhl (1) eine bis jenseits einer Teilungsachse (6) des Grundlagers (2) reichende Kurbelwellenschürze (7) aufweist, welche durch eine Wand (9) das Lagersegment (3) an eine maschinenseitige Lagerstuhlwurzel (8) bindet, und in die Wand (9) Durchbrüche (10) zur Ventilation der Maschine eingebracht sind,
**dadurch gekennzeichnet, daß** in die Wand (9) eine die Wandstärke lokal erhöhende Rippe (12) eingebracht ist, welche die Schraubenpfeife (11) einschließt und bis zur Lagerstuhlwurzel (8) geführt ist, wobei auf den parallel zur Wand (9) verlaufenden Stirnseiten (13, 14) der Rippe (12) Einsenkungen (15) eingebracht sind.

2. Kurbelgehäuse nach Anspruch 1,
**dadurch gekennzeichnet, daß** eine Gewindebohrung (16) der Schraubenpfeife (11) auf die Lagerstuhlwurzel (8) gerichtet in die Rippe (12) eingebracht ist.

3. Kurbelgehäuse nach Anspruch 1 oder 2,
**dadurch gekennzeichnet, daß** die Stirnseiten (13, 14) der Rippe (12) sich zum Lagersegment (3) aufweiten und das Lagersegment (3) von der Teilungsachse (6) an über einen Bogenwinkel von 50° bis 80° mit der Rippe (12) verbunden ist.

4. Kurbelgehäuse nach Anspruch 3,
**dadurch gekennzeichnet, daß** die Stirnseiten (13, 14) sich in der Form bezüglich der Längserstreckung der Rippe (12) konvexer Bögen aufweiten.

5. Kurbelgehäuse nach Anspruch 1,
**dadurch gekennzeichnet, daß** die Einsenkungen (15) beider Stirnseiten (13, 14) der Rippe (12) die gleiche Gestalt aufweisen und einander gegenüberliegen und in der Rippe (12) Rippenschenkel (26, 27) ausbilden.

6. Kurbelgehäuse nach Anspruch 5,
**dadurch gekennzeichnet, daß** die Einsenkungen (15) annähernd die Form eines Tropfens aufweisen, wobei ein Spitzende (18) der Einsenkung (15) der Lagerstuhlwurzel (8) benachbart und ein Rundende (19) der Einsenkung (15) dem Grundlager (2) benachbart liegt.

7. Kurbelgehäuse nach Anspruch 5 oder 6,
**dadurch gekennzeichnet, daß** ein zwischen den Einsenkungen (15) angeordneter Einsenkungsboden (17) etwa in einer gemeinsamen Ebene mit der Wand (9) liegt.

8. Kurbelgehäuse nach Anspruch 7,
**dadurch gekennzeichnet, daß** der Einsenkungsboden (17) eine geringe Dicke aufweist, welche höchstens der Wandstärke der Wand (9) entspricht.

9. Kurbelgehäuse nach Anspruch 7,
**dadurch gekennzeichnet, daß** der Einsenkungsboden (17) mindestens benachbart des Spitzendes (18) und des Rundendes (19) der Einsenkung (15) mit geringem Durchmessergefälle abgesetzt ist.

10. Kurbelgehäuse nach einem der vorhergehenden Ansprüche,
**dadurch gekennzeichnet, daß** in der Wand (9) mehrere Stege (20, 21, 22) angeordnet sind, welche sich etwa auf die Höhe der Stirnseiten (13, 14) der Rippe (12) erheben und die Rippe (12) mit der Kurbelwellenschürze (7) verbinden.

11. Kurbelgehäuse nach Anspruch 10,
**dadurch gekennzeichnet, daß** ein oberer Steg (20) etwa auf Höhe des Rundendes (19) der Einsenkung (15), ein mittiger Steg (21) etwa auf Höhe der Teilung des Grundlagers (2) benachbart der Schraubenpfeife (11) und ein unterer Steg (22) vom Fußpunkt des mittigen Steges (21) zum offenen Schürzenende (23) der Kurbelwellenschürze (7) verläuft, wobei der obere Steg (20) und der mittige Steg (21) weitgehend parallel zur Teilungsachse (6) angeordnet sind.

12. Kurbelgehäuse nach einem der vorhergehenden Ansprüche,
**dadurch gekennzeichnet, daß** zwischen den Rippen (12) in die Wand (9) ein elliptischer oder ovaler Durchbruch (10) eingebracht ist, welcher sich in Richtung einer orthogonal zu der Teilungsachse (6) verlaufenden Mittelachse (24) des Grundlagers (2) erstreckt.

13. Kurbelgehäuse nach einem der vorhergehenden Ansprüche,
**dadurch gekennzeichnet, daß** der Lagerstuhl (1) symmetrisch bezüglich der Mittelachse (24) ausgestaltet ist.

14. Kurbelgehäuse nach einem der vorhergehenden Ansprüche,
**dadurch gekennzeichnet, daß** der Lagerstuhl (1) einstückig ausgeführt ist.

## Claims

1. Crankcase, for a reciprocating engine, with a bearing block (1) for attachment to a divided base (2) of the crankshaft, which comprises a bearing section (3) and a bearing cover (4) which can be bolted on both sides in bolt channels (11) by means of bearing bolts (5), whereby the bearing block (1) has a crankshaft apron (7), which binds the bearing section (3) to a bearing block root face (8), on the machine side, by means of a wall (9), extending as far as the other side of the dividing axis (6) of the base (2), and openings (10) are made in the wall (9) for ventilating the engine,
**characterized in that** a rib (12), which encloses the bolt channel (11) and is guided as far as the bearing block root face (8), and which locally increases wall thickness, is applied to the wall (9), with depressions (15) being applied to the faces (13, 14) of the rib (12) running parallel to the wall (9).

2. Crankcase in accordance with claim 1,
**characterized in that** there is a threaded boring (16) of the bolt channel (11), directed towards the bearing-block root face (8), in the rib (12).

3. Crankcase in accordance with claim 1 or 2,
**characterized in that**
the faces (13, 14) of the rib (12) broaden towards the bearing section (3) which is connected to the rib (12), from the dividing axis (6) onwards, over an arc angle of 50° to 80°.

4. Crankcase in accordance with claim 3,
**characterized in that**
the faces (13, 14) widen in the form of convex arcs in the lengthwise direction of the rib (12).

5. Crankcase in accordance with claim 1,
**characterized in that**
the depressions (15) in both faces (13, 14) of the rib (12) have the same form and lie opposite each other, and form side elements (26, 27) in the rib (12).

6. Crankcase in accordance with claim 5,
**characterized in that**
the depressions (15) have the approximate form of drops of water, whereby a tip (18) of the depression (15) is adjacent to the bearing block root face (8) and a rounded end (19) of the depression (15) lies adjacent to the base (2).

7. Crankcase in accordance with claim 5 or 6,
**characterized in that**
a base of a depression base (17), disposed between the depressions (15), lies roughly in a common plane with the wall (9).

8. Crankcase in accordance with claim 7,
**characterized in that**
the base (17) of the depressions is thin, having, at most, the thickness of the wall (9).

9. Crankcase in accordance with claim 7,
**characterized in that**
the base (17) of the depressions, at lease adjacent to the tip (18) and the rounded end (19) of the depression (15), is recessed with only a slight reduction in diameter.

10. Crankcase in accordance with one of the preceding claims,
**Characterized in that**
Several webs (20, 21, 22), which rise to the height of the faces (13, 14) of the rib (12), are disposed in the wall (9), and connect the rib (12) to the crankshaft apron (7).

11. Crankcase in accordance with claim 10,
**characterized in that**
an upper web (20), runs approximately at the level of the rounded end (19) of the depression (15), a central web (21) runs approximately at the level of the divide in the base (2) adjacent to the bolt channel (11) and a lower crosspiece (22) runs from the base of the central web (21) to the open end of the apron (23) of the crankshaft, whereby the upper web (20) and the central web (21) are disposed largely parallel to the division axis (6).

12. Crankcase in accordance with one of the preceding claims,
**characterized in that**
there is an elliptical or oval opening (10), in the wall (9) between the ribs (12), which extends in the direction of a central axis (24), of the base (2), which runs orthogonally in relation to a division axis (6).

13. Crankcase in accordance with one of the preceding claims,
**characterized in that**
the bearing block (1) is symmetrically formed in relation to the central axis (24).

14. Crankcase in accordance with one of the preceding claims,
**characterized in that**
the bearing block (1) is produced as a single piece.

## Revendications

1. Carter de vilebrequin, pour à pistons alternatifs, comprenant un châssis de montage (1) pour le montage d'un palier de base (2) subdivisé du vilebrequin, ledit palier de base comprenant un segment de palier (3) conformé sur le châssis de montage (1) et un couvercle de palier (4) vissé des deux côtés au moyen de vis (5) sur le segment de palier (3) dans des colonnes à vis (11), dans lequel le châssis de montage (1) comprend un tablier de vilebrequin (7) qui s'étend jusqu'au-delà d'un axe (6) de subdivision du palier de base (2), ledit tablier reliant à travers une paroi (9) le segment de palier (3) à un pied du châssis de montage (8) du côté moteur, et des traversées (10) pour la ventilation du moteur sont ménagées dans la paroi (9),
**caractérisé en ce qu'**une nervure (12) qui augmente localement l'épaisseur de la paroi est ménagée dans ladite paroi (9), ladite nervure englobant les colonnes à vis (11) et s'étendant jusqu'au pied du châssis de montage (8), et des renfoncements (15) sont ménagés sur les côtés frontaux (13, 14) de la nervure (12) qui s'étendent parallèlement à la paroi (9).

2. Carter de vilebrequin selon la revendication 1,
**caractérisé en ce qu'**un perçage taraudé (16) de la colonne à vis (11) est ménagé dans la nervure (12) en direction du pied du châssis de montage (8).

3. Carter de vilebrequin selon l'une ou l'autre des revendications 1 et 2, **caractérisé en ce que** les côtés frontaux (13, 14) de la nervure (12) s'élargissent vers le segment de palier (3), et **en ce que** le segment de palier (3) est relié à la nervure (12) sur un angle d'arc de 50 à 80° en partant de l'axe de subdivision (6).

4. Carter de vilebrequin selon la revendication 3,
**caractérisé en ce que** les côtés frontaux (13, 14) s'élargissent sous la forme d'arcs convexes par rapport à l'extension longitudinale de la nervure (12).

5. Carter de vilebrequin selon la revendication 1,
**caractérisé en ce que** les renfoncements (15) des deux côtés frontaux (13, 14) la nervure (12) ont la même configuration, **en ce qu'**ils sont opposés l'un à l'autre, et **en ce qu'**ils forment des ailes (26, 27) dans la nervure (12).

6. Carter de vilebrequin selon la revendication 5, **caractérisée en ce que** les renfoncements (15) ont approximativement la forme d'une goutte, une extrémité en pointe (18) du renfoncement (15) étant située au voisinage du pied (8) du châssis de montage, et une extrémité arrondie (19) du renfoncement (15) étant située au voisinage du palier de base (2).

7. Carter de vilebrequin selon l'une ou l'autre des revendications 5 et 6,
**caractérisé en ce qu'**un fond de renfoncement (17), agencé entre les renfoncements (15), est situé approximativement dans un plan commun avec la paroi (9).

8. Carter de vilebrequin selon la revendication 7,
**caractérisé en ce que** le fond de renfoncement (17) présente une épaisseur plus faible, qui correspond tout au plus à l'épaisseur de la paroi (9).

9. Carter de vilebrequin selon la revendication 7,
**caractérisé en ce que** le fond de renfoncement (17) est en retrait, au moins au voisinage de l'extrémité pointue (18) et de l'extrémité arrondie (19) du renfoncement (15), avec un gradient de diamètre plus faible.

10. Carter de vilebrequin selon l'une quelconque des revendications précédentes,
**caractérisé en ce que** plusieurs barrettes (20, 21, 22) sont agencées dans la paroi (9), lesdites barrettes se dressant approximativement à la hauteur des côtés frontaux (13, 14) de la nervure (12), et reliant la nervure (12) au tablier (7) de vilebrequin.

11. Carter de vilebrequin selon la revendication 10,
**caractérisé en ce qu'**une barrette supérieure (20) s'étend approximativement à hauteur de l'extrémité arrondie (19) du renfoncement (15), une barrette médiane (21) s'étend approximativement à hauteur de la subdivision du palier de base (2) au voisinage des colonnes à vis (11), et une barrette inférieure (22) s'étend depuis le pied de la barrette médiane (21) jusqu'à l'extrémité ouverte (23) du tablier de vilebrequin (7), la barrette supérieure (20) et la barrette médiane (21) étant agencées largement parallèles à l'axe de subdivision (6).

12. Carter de vilebrequin selon l'une des revendications précédentes,
**caractérisé en ce qu'**une traversée (10) elliptique ou ovale est ménagée dans la paroi (9) entre les nervures (12), ladite traversée s'étendant en direction d'un axe médian (24) du palier de base (2), qui s'étend perpendiculairement à l'axe de subdivision (6).

13. Carter de vilebrequin selon l'une des revendications précédentes,
**caractérisé en ce que** le châssis de montage (1) est réalisé symétrique par rapport à l'axe médian (24).

14. Carter de vilebrequin selon l'une des revendications précédentes,
**caractérisé en ce que** le châssis de montage (1) est réalisé d'une seule pièce.
